(19) Europäisches Patentamt
European Patent Office
Office européen des brevets

(11) Veröffentlichungsnummer: **0 044 955**
**B1**

(12) # EUROPÄISCHE PATENTSCHRIFT

(45) Veröffentlichungstag der Patentschrift: **13.04.83**

(21) Anmeldenummer: **81105004.6**

(22) Anmeldetag: **27.06.81**

(51) Int. Cl.³: **A 01 N 25/02,** A 01 N 47/22 // (A01N47/22, 43/58)

(54) **Flüssige Herbizidmischung.**

(30) Priorität: **24.07.80 DE 3027959**

(43) Veröffentlichungstag der Anmeldung: **03.02.82 Patentblatt 82/5**

(45) Bekanntmachung des Hinweises auf die Patenterteilung: **13.04.83 Patentblatt 83/15**

(84) Benannte Vertragsstaaten: **AT BE CH DE FR GB IT LI NL SE**

(56) Entgegenhaltungen:
**FR-A-1 558 512**
**US-A-3 342 673**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Kleuser, Dieter, Dr., Pierstrasse 4, D-6710 Frankenthal (DE)**
Erfinder: **Pawliczek, Josef Bernd, Dr., Carl-Goerdeler-Strasse 22, D-6720 Speyer (DE)**
Erfinder: **Oeser, Heinz-Guenter, Mohngasse 25, D-6711 Dirmstein (DE)**

**EP 0 044 955 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Flüssige Herbizidmischung

Die vorliegende Erfindung betrifft eine flüssige Herbizidmischung auf der Grundlage eines Pyridazonderivats und eines Bicarbamats, die in einem Säureamid gelöst sind.

Es ist bekannt, 1-Phenyl-4-amino-5-chlor-pyridazon-(6) (Chloridazon) als Herbizid zu verwenden (DE-PS 1 105 232, GB-PS 871 674). Es ist ferner bekannt, das 3-Methoxycarbonylaminophenyl-N-(3'-methyl-phenyl)-carbamat (Phenmedipham) als Herbizid zu verwenden (DE-PS 1 567 151, GB-PS 1 173 753). Es ist ferner bekannt, eine Mischung aus Chloridazon und Phenmedipham als Herbizid zu verwenden (DE-PS 1 642 216). Es ist ferner bekannt, Chloridazon in N-Methylpyrrolidon zu lösen (DE-PS 1 216 010). Ferner ist es bekannt, die Mischung aus Chloridazon und Phenmedipham in einer Mischung aus N-Methylpyrrolidon und Morpholin zu lösen (DE-PS 1 642 216).

Zur Verbreiterung des Wirkungsspektrums von herbiziden Wirkstoffen kann man zur Herstellung einer Mischung zwei oder mehrere Formulierungen von zwei oder mehr Einzelwirkstoffen in einem Gefäß mischen (Tankmischung) oder in einer Fertigformulierung die Mischung der Wirkstoffe verwenden.

Eine Tankmischung ist die auf die Anwendungskonzentration eingestellte wäßrige Verdünnung aus der Mischung der beiden Formulierungen der beiden Wirkstoffe, die in Form eines Emulsionskonzentrats (flüssig), als Suspensionskonzentrat (Flowable) (flüssig-fest) oder als Spritzpulver (Wettable Powder) (fest) vorliegen können. Bei solchen Tankmischungen bereitet die Mischverträglichkeit der verwendeten Formulierungen häufig Schwierigkeiten. Da die Formulierungsart durch die chemisch-physikalischen Eigenschaften eines Wirkstoffes bedingt ist, bestimmen diese Eigenschaften die Auswahl der Lösungsmittel und der Hilfsstoffe, z. B. Emulgatoren, Dispergiermittel, Netzmittel. Bei zwei unterschiedlichen, ja selbst bei gleichen Formulierungsarten kann es deshalb zu Unverträglichkeiten in der Tankmischung kommen. Die Folgen sind u. a. Aufrahmung, Koagulation, Aggregation, Ausfällung, die es unmöglich machen, die Mischung auszubringen (zu verspritzen).

Bei einer Fertigformulierung einer Mischung geht man dagegen von einer Formulierung mit mindestens zwei Wirkstoffen aus, die zusammen, als Emulsionskonzentrat, als Suspensionskonzentrat (Flowable) oder als Spritzpulver (Wettable Powder) formuliert, vorliegen können. Diese Formulierungen können durch Verdünnung mit Wasser direkt in Spritzbrühen mit der gewünschten Anwendungskonzentration überführt werden. Dabei ist prinzipiell jede Kombination von verschiedenenen Wirkstoffarten möglich. Die Formulierung zweier oder mehrerer Wirkstoffe nach einer Formulierungsart wird jedoch durch Unterschiede beispielsweise in den Löslichkeiten, den Schmelzpunkten, den spezifischen Gewichten sowie in der Stabilität erheblich beeinflußt bzw. unmöglich gemacht. Eine weitere Schwierigkeit liegt darin, ein geeignetes, einheitliches Hilfsstoffsystem, wie Emulgatoren, Netzmittel oder Dispergiermittel für die zu mischenden Wirkstoffe zu finden.

Als besonders schwierig erweist sich hierbei die Flüssigformulierung (Emulsionskonzentrat) zweier oder auch mehrerer fester Wirkstoffe, die extrem unterschiedliche Löslichkeiten in verschiedenenen Lösungsmitteln aufweisen, wobei zusätzlich aus Gründen der Stabilität einer der Wirkstoffe die Auswahl der Lösungsmittel schon von vorneherein sehr begrenzt sein kann. Eine weitere Schwierigkeit liegt in der Emulsionsstabilität solcher Mischungen, da z. B. die Kristallisationsneigung der verschiedenenen Wirkstoffe in den Spritzbrühen aufgrund ihrer unterschiedlichen Löslichkeiten bei der Anwendung (Spritzung) störend wirken kann. Die Kristallisationsneigung der Wirkstoffe wird erhöht, je besser die Lösungsmittel in Wasser löslich sind, weil sich bei der Verdünnung dieser Lösungsmittel mit Wasser keine Emulsion sondern eine wäßrige Lösung bildet, in der die Wirkstoffe nicht mehr löslich sind und daher zur Auskristallisation neigen. Die genannten Schwierigkeiten treten insbesondere bei den bekannten herbizid gut wirksamen Mischungen von Chloridazon mit Phenmedipham auf (DE-PS 1 642 216). Gegenstand der vorliegenden Erfindung sind daher flüssige Herbizidmischungen in Form stabiler Emulsionskonzentrate (EC) von Pyridazonderivaten mit Biscarbamaten in einem Lösungsmittel.

Die Pyridazonderivate lassen sich nur in extrem polaren, für EC-Formulierungen wenig geeigneten Lösungsmitteln wie Dimethylformamid, N-Methylpyrrolidon und Dimethylsulfoxid in ausreichender Menge lösen, während Biscarbamate zwar sehr gut löslich aber extrem instabil in den genannten Lösungsmitteln sind, und nur in Isophoron oder Cyclohexanon ausreichend stabil formulierbar sind, wobei diese Lösungsmittel Pyridazonderivate aber nicht oder kaum lösen und daher für diese Verbindungen ungeeignet sind. Mischungen aus beiden Lösungsmittelarten sind zwar prinzipiell möglich, doch muß dabei der Anteil an der polaren Komponente so hoch gewählt werden, daß man wieder in den Bereich mangelnder Stabilität der Biscarbamate oder der schlechten Löslichkeit der Pyridazonderivate gerät.

Tabelle 1

Beispiele für Löslichkeit von Chloridazon und einem Biscarbamat

Substanz 1: Chloridazon

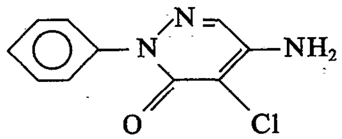

Substanz 2: Biscarbamat

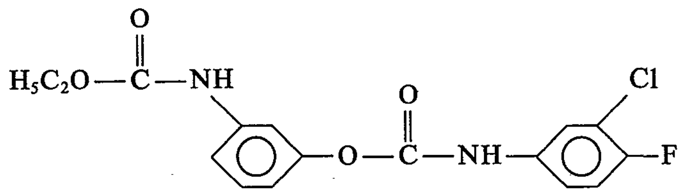

| Lösungsmittel | Löslichkeit in % (g Substanz in 100 g Lösung bei Raumtemperatur (RT 20°C) | | $H_2O$-Löslichkeit des Lösungsmittels (%) Gew.-% Lösungsmittel in Wasser |
|---|---|---|---|
| | Substanz 1 | Substanz 2 | (%) |
| Isophoron | 6,0 | 33,7 | 1,2 |
| Cyclohexanon | 7,0 | 35,0 | 3–4 |
| N-Methylpyrrolidon | 22,5 | 30,8 | 100 |
| Dimethylsulfoxid | 29,3 | 55,3 | 100 |
| Dimethylformamid | 22,1 | 47,2 | 100 |

In der Tabelle 2 wird die Wirkstoffstabilität der oben genannten Substanz 2 in verschiedenen Lösungsmitteln als Beispiel aufgeführt. Die Substanz 1 zeigt in diesen Lösungsmitteln hinsichtlich der Stabilität keine Schwierigkeiten. Die Konzentration an Wirkstoff war bei diesen Untersuchungen 0,002 molar. Die Analyse wurde mit Hilfe der Hochdruckflüssigkeitschromatographie (HPLC) durchgeführt.

Tabelle 2

Wirkstoffstabilität der Substanz 2 (Biscarbamat)

| Lösungsmittel | Temperatur | Abbau in Abhängigkeit von der Zeit | | | |
|---|---|---|---|---|---|
| N-Methylpyrrolidon (rein 0,05% $H_2O$) | 30°C | Wirkstoffgehalt Gew.-% | 100 | 96,7 | 76,3 |
| | | Abbauzeit (min) | 5 | 30 | 210 |
| | 50°C | Wirkstoffgehalt (%) | 92,3 | 76,5 | 52,8 |
| | | Abbauzeit (min) | 5 | 20 | 60 |
| Dimethylformid (technisch) | 50°C | Wirkstoffgehalt (%) | 99,5 | 98,1 | 95,5 |
| | | Abbauzeit (min) | 5 | 20 | 60 |
| | 70°C | Wirkstoffgehalt (%) | 98,5 | 87,2 | 57,4 |
| | | Abbauzeit (min) | 7 | 30 | 63 |
| | 80°C | Wirkstoffgehalt (%) | 85,4 | 54,7 | 32,9 |
| | | Abbauzeit (min) | 7 | 23 | 37 |
| Isophoron | 80°C | Wirkstoffgehalt (%) | 93,0 | | |
| | | Abbauzeit (Std.) | 24 | | |

Berücksichtigt man, daß Formulierungen durchaus über einen Zeitraum von 1–2 Jahren bei Temperaturen von 30 bis 40° C lagerstabil sein sollen, so verdeutlichen die obengefundenen Daten die Schwierigkeit, eine Fertigformulierung aus Pyridazonen mit Biscarbamaten herzustellen. Eine weitere, ebenfalls zu beachtende Schwierigkeit liegt in der Auswahl eines geeigneten Hilfsmittelsystems, wie Emulgatoren und Netzmitteln, das die Stabilität der Biscarbamate nicht zusätzlich negativ beeinflussen darf.

So zeigt die Fertigformulierung, die in der DE-PS 1 642 216 unter Beispiel 6/I aufgeführt ist und das wenig geeignete N-Methylpyrrolidon neben Morpholin enthält, ein schlechtes Lagerstabilitätsverhalten.

In Tabelle 3 sind die Ergebnisse zweier Formulierungen mit den Wirkstoffen Chloridazon (Substanz 1) und Phenmedipham als Beispiele zusammengefaßt.

Es wurde der Abbau des Phenmedipham bei verschiedenen Temperaturen verfolgt.

Tabelle 3

Wirkstoffabbau in Formulierungen

| Rezeptur (g/l) | Temperatur | Phenmedipham-Abbau Zeit | Wirkstoffgehalt |
|---|---|---|---|
| 50 Phenmedipham | Rt | 4 Wochen | 79,5% |
| 150 Chloridazon | | | |
| 200 Netzmittel[1]) | 50°C | 4 Wochen | 4,8% |
| 50 Emulgiermittel[2]) | | | |
| ad 1000 g Dimethylformamid | | | |
| 167 Chloridazon | 50°C | 1 Stunde | 30,8% |
| 83 Phenmedipham | | | |
| 300 N-Methylpyrrolidon | | 2 Stunden | 16,4% |
| 24 Morpholin | | 3 Stunden | 12,8% |
| 100 Emulgiermittel[2]) | | | |
| 326 Cyclohexanon-Destillationsrückstände | 70°C | 1 Stunde<br>2 Stunden | 3,21%<br>total abgebaut |

vgl. DE-PS 16 42 216, Beispiel 6/I

[1]) Ethoxyliertes Isooctylphenol
[2]) Ethoxyliertes Rizinusöl

Eine deutliche Verbesserung der Stabilität des Phenmediphams erhält man zwar durch eine Mischung aus Dimethylformamid und Isophoron anstelle des Dimethylformamids allein (Wirkstoffgehalt nach 4 Wochen bei 50° C ca. 60%), doch ist diese keinesfalls ausreichend für praktische Zwecke.

Auf Grund der oben gefundenen Daten sollten also für eine Fertigformulierung Lösungsmittel verwendet werden, die folgende Bedingungen erfüllen:

a) geringe Wasserlöslichkeit (= geringe Kristallisationsneigung der Wirkstoffe)
b) gute Biscarbamatstabilität
c) relativ gutes Lösungsvermögen für Pyridazonderivat und Biscarbamat

Es wurde gefunden, daß eine flüssige Herbizidmischung auf der Grundlage eines Pyridazonderivats und eines Biscarbamats die obengenannten Bedingungen erfüllt, wenn sie eine Lösung der Wirkstoffe in einem Säureamid der allgemeinen Formel

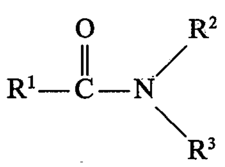

enthält, in der $R^1$ einen Alkylrest mit bis zu 8 C-Atomen oder einen gegebenenfalls durch Methyl oder Äthyl substituieren Phenylrest und $R^2$, $R^3$ je einen Alkylrest mit zusammen bis zu 8 C-Atomen bedeuten und das Säureamid insgesamt 8 bis 15 C-Atome enthält. Beispiele von Säureamiden sind in der Tabelle 4 zusammengefaßt. Bestimmt wurden die Löslichkeiten der Substanzen 1 (Chloridazon) und 2 (Biscarbamat) wie sie in Tabelle 1 aufgeführt sind, sowie die Wasserlöslichkeit der Lösungsmittel.

Die Herstellung der in Tabelle 4 aufgeführten Amide erfolgte in bekannter Weise durch die Umsetzung der Säurechloride mit den entsprechenden Aminen unter Zusatz von Hilfsbasen.

Tabelle 4

Löslichkeiten der Substanzen 1 und 2 in Säureamiden bei Rt

| Nr. | Strukturformel | Löslichkeit in (%) Substanz 1 (Chloridazon) | Substanz 2 (Biscarbamat) | Wasserlöslichkeit der Lösungsmittel (%) |
|---|---|---|---|---|
| 1 | 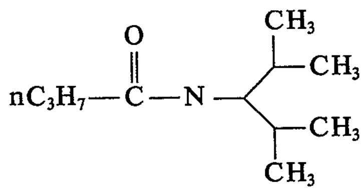 | 8,7 | 39,9 | 0,6 |
| 2 | 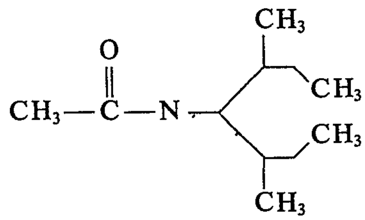 | 13,5 | 37,0 | 1,7 |
| 3 | 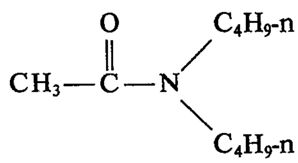 | 12,2 | 43,8 | 1,1 |
| 4 | 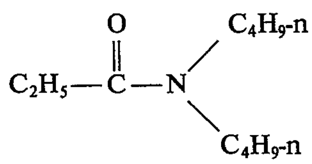 | 7,8 | 45,4 | 0,3 |
| 5 | 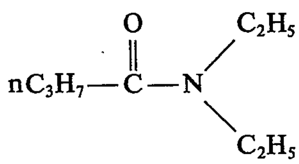 | 10,8 | 41,6 | 1,1 |
| 6 | 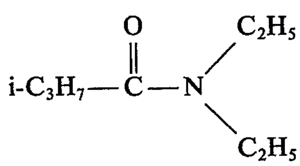 | 8,1 | 49,0 | 1,2 |
| 7 | 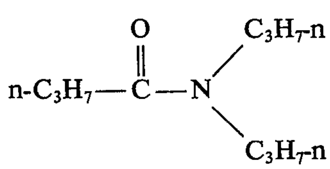 | 10,4 | 38,8 | 1,5 |

Fortsetzung

| Nr. | Strukturformel | Löslichkeit in (%) Substanz 1 (Chloridazon) | Substanz 2 (Biscarbamat) | Wasserlöslichkeit der Lösungsmittel (%) |
|---|---|---|---|---|
| 8 | 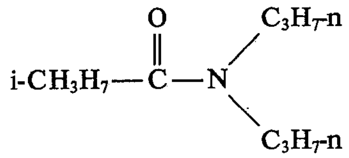 | 9,6 | 45,5 | 1,6 |
| 9 | 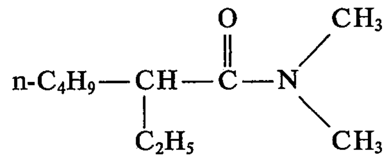 | 10,8 | 29,1 | 1,5 |
| 10 | 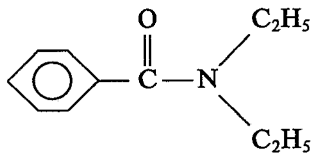 | 10,8 | 39,5 | 3,7 |
| 11 | 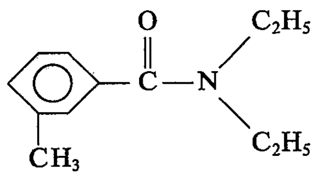 | 8,6 | 29,4 | 2,2 |
| 12 | 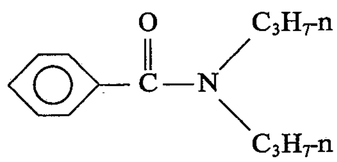 | 8,3 | 33,3 | 0,5 |
| 13 | 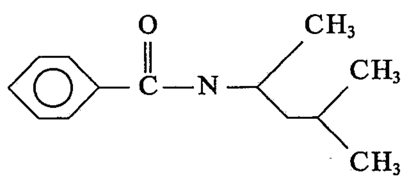 | 9,6 | 31,1 | 1,1 |

Pyridazonderivate sind beispielsweise Chloridazon, 5-Amino-4-brom-2-phenyl-3(2H-)pyridazinon. Biscarbamate sind beispielsweise Phenmedipham, (3-Chlor-4-fluorphenyl)-carbaminsäure-3[(ethoxycarbonyl)amino]phenylester; (3,4-Trifluorphenyl)carbaminsäure-3-[(ethoxycarbonyl)amino]phenylester.

Da die Löslichkeit von festen Wirkstoffen in Emulsionskonzentraten auch bei niedrigeren Temperaturen, beispielsweise bis −5° C, gewährleistet sein sollte, kann es aus Kältestabilitätsgründen nötig sein, bei einigen der in Tabelle 4 aufgeführten Lösungsmitteln polare Zusatzlösungsmittel in einer Menge bis zu 10 bis 15% (Gew.-%) zuzusetzen. Als günstigstes Lösungsmittel erwies sich hierbei das Dimethylsulfoxid.

Als Emulgatoren werden die im Pflanzenschutz üblichen nichtionogenen bzw. anionaktiven Produkte eingesetzt. Solche Emulgatoren sind beispielsweise ethoxyliertes Rizinusöl, Ca-Salz der Dodecylbenzolsulfonsäure, ethoxyliertes Ölsäuremonoäthanolamid, ethoxyliertes Isooctylphenol. Netzmittel sind beispielsweise ethoxyliertes Octylphenol-, Nonylphenol, Alkylphenolpolyglykolether, Tributylphenolpolyglykolether.

Die flüssigen Herbizidmischungen gemäß der Erfindung enthalten beispielsweise 80 bis 150 g Pyridazonderivat je Liter Flüssigkeit, insbesondere 100 bis 120 g pro Liter. Die flüssigen Herbizidmischungen gemäß der Erfindung enthalten ferner beispielsweise 50 bis 100 g Biscarbamat

pro Liter Flüssigkeit, insbesondere 70 bis 90 g pro Liter. Sie enthalten beispielsweise 30 bis 100 g Emulgiermittel je Liter Flüssigkeit, insbesondere 40 bis 60 g je Liter. Sie enthalten ferner beispielsweise 50 bis 120 g Netzmittel je Liter Flüssigkeit, insbesondere 90 bis 110 g je Liter.

## Beispiel 1

In der folgenden Tabelle sind die Stabilitätsuntersuchungen von Phenmedipham bei verschiedenenen Temperaturen und konstanter Zeit zusammengefaßt. Es wurden 500 mg technischer Wirkstoff in 25 ml Lösungsmittel gelöst, die Lösungen bei der entsprechend gewählten Temperatur 24 Stunden gelagert und der Restwirkstoffgehalt analytisch mit Hilfe der HPLC-Methode bestimmt.

Tabelle 5

| Lösungsmittel | Restwirkstoff an Phenmedipham | | |
|---|---|---|---|
| | Temperatur | Zeit | Wirkstoffgehalt |
| Isophoron | 50°C | 24 Std. | 99,3% |
| | 70°C | 24 Std. | 96,3% |
| Dimethylformamid | 50°C | 24 Std. | 9,3% |
| | 70°C | 24 Std. | n. n. (nicht nachweisbar) |
| 2-Äthylhexancarbonsäureamid (Nr. 9 aus Tabelle 4) | 50°C | 24 Std. | 98,1% |
| | 70°C | 24 Std. | 98,0% |
| N,N-Dipropylbuttersäureamid (Nr. 7 aus Tabelle 4) | 50°C | 24 Std. | 100,0% |
| | 70°C | 24 Std. | 97,6% |
| N,N-Diäthyl-3-methyl-benzolcarbonsäureamid (Nr. 11 Tabelle 4) | 50°C | 24 Std. | 95,5% |
| | 70°C | 24 Std. | 60,0% |

## Beispiel 2

Es wurde ein Emulsionskonzentrat folgender Zusammensetzung hergestellt:

120 g/l Chloridazon
80 g/l Phenmedipham
100 g/l Dimethylsulfoxid
100 g/l Netzmittel (Isooctylphenol × 5,7 EO (Ethylenoxid))
50 g/l Emulgiermittel (Isooctylphenol × 25 PO (Propylenoxid) × 40 EO)
ad 1000 ml 2-Äthylhexancarbonsäure-N,N-dimethylamid

Die Lagerung dieses Emulsionskonzentrates bei 50° C für 4 Wochen zeigte nur einen geringfügigen Abbau des Phenmediphams.

Die Prüfung der Emulsionsstabilität einer durch Verdünnung des Emulsionskonzentrats mit Wasser hergestellten 0,5- oder 2,0%igen wäßrigen Emulsion über einen Zeitraum von 6 Stunden bei Raumtemperatur zeigte 0,4 bis 0,6 ml Bodensatz.

## Beispiel 3

Entsprechend dem Beispiel 2 wurde ein Emulsionskonzentrat hergestellt, dem jedoch noch zusätzlich 3 g/l N-Isopropylsulfaminsäure zugesetzt wurde. Die Lagerung bei 50° C über 4 Wochen zeigte keinen Abbau des Biscarbamates Phenmedipham.

Beispiel 4

Es wurde ein Emulsionskonzentrat folgender Zusammensetzung hergestellt:

100 g/l Chloridazon
75 g/l Phenmedipham
100 g/l Netzmittel (Isooctylphenol × 5,7 EO (Ethylenoxid))
50 g/l Emulgiermittel (Isooctylphenol × 25 PO (Propylenoxid) × 40 EO)
1 g/l Bromessigsäure
ad 1000 ml N,N-Diäthyl-3-methyl-benzolcarbonsäureamid

Die Stabilitätsuntersuchung des Phenmedipham bei Lagerung der Formulierung bei 50° C über einen Zeitraum von ei einem halben Jahr zeigte keinen Abbau.

Beispiel 5

Es wurde ein Emulsionskonzentrat folgender Zusammensetzung hergestellt:

120 g/l Chloridazon
80 g/l (3-Chlor-4-fluorphenyl)carbaminsäure-3(ethoxy-carbonyl)amino-phenylester (Substanz 2 aus Tabelle 1)
100 g/l Dimethylsulfoxid
100 g/l Netzmittel (Isooctylphenol × 5,7 EO (Ethylenoxid))
50 g/l Emulgiermittel (Isooctylphenol × 25 PO (Propylenoxid) × 40 EO)
3 g/l N-Isopropylaminsäure
ad 1000 ml 2-Äthylhexancarbonsäure-N,N-dimethylamid

Nach vierwöchiger Lagerung bei 50° C zeigte sich kein Biscarbamatabbau.
Die Überprüfung der Emulsionsstabilität einer 0,5- oder 2,0%igen wäßrigen Emulsion zeigte nach 6 Stunden bei Raumtemperatur geringfügig Bodensatz.

Beispiel 6

Entsprechend dem Beispiel 4 wurde ein Emulsionskonzentrat aus Chloridazon und Phenmedipham hergestellt, jedoch anstelle des N,N-Diäthyl-3-methyl-benzolcarbonsäureamids Dimethylformamid eingesetzt. Nach halbjähriger Lagerung der Formulierung bei 50°C zeigte sich hierbei ein Wirkstoffabbau des Phenmedipham von 36%.

**Patentansprüche**

1. Flüssige Herbizidmischung auf der Grundlage eines Pyridazonderivats und eines Biscarbamats dadurch gekennzeichnet, daß sie eine Lösung der Wirkstoffe in einem Säureamid der allgemeinen Formel

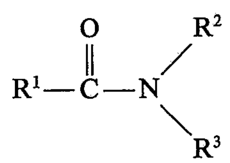

enthält, in der

$R^1$ einen Alkylrest mit bis zu 8 C-Atomen oder einen gegebenenfalls durch Methyl oder Äthyl substituierten Phenylrest und
$R^2$, $R^3$ je einen Alkylrest mit zusammen bis zu 8 C-Atomen bedeuten und das Säureamid insgesamt 8 bis 15 C-Atome

enthält.
2. Herbizidmischung nach Anspruch 1, dadurch gekennzeichnet, daß das Säureamid bis zu 5 Gew.-% in Wasser löslich ist.
3. Herbizidmischung nach Anspruch 1, dadurch gekennzeichnet, daß das Pyridazonderivat die allgemeine Formel

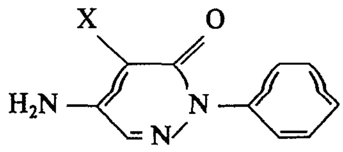

hat, wobei X Chlor oder Brom bedeutet.

4. Herbizidmischung nach Anspruch 1, dadurch gekennzeichnet, daß das Biscarbamat die allgemeine Formel

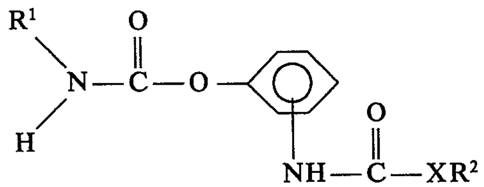

hat, wobei

X Sauerstoff oder Schwefel und
$R^1$ einen mono- oder disubstituierter Phenylrest mit den Substituenten Methyl, Äthyl oder Halogen und
$R^2$ Methyl oder Äthyl

bedeutet.

5. Herbizidmischung nach Anspruch 1, dadurch gekennzeichnet, daß der Wirkstoffgehalt im Säureamid für das Pyridazonderivat 80 bis 150 g pro Liter und für das Biscarbamat 50 bis 100 g pro Liter beträgt.

6. Herbizidmischung nach Anspruch 1, dadurch gekennzeichnet, daß sie 30 bis 100 g Emulgiermittel pro Liter und 50 bis 120 g Netzmittel pro Liter enthält.

7. Herbizidmischung nach Anspruch 1, dadurch gekennzeichnet, daß sie eine Mischung aus Chloridazon und Phenmedipham enthält.

**Claims**

1. A liquid herbicidal composition, based on a pyridazone derivative and a biscarbamate, which contains a solution of the active ingredients in an acid amide of the general formula

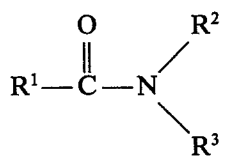

where

$R^1$ ist alkyl of up to 8 carbon atoms or optionally methyl- or ethyl-substituted phenyl, and

$R^2$ and $R^3$ are each alkyl which together have up to 8 carbon atoms, the acid amide having a total of 8 to 15 carbon atoms.

2. A herbicidal composition as claimed in claim 1, wherein up to 5% by weight of the acid amide is soluble in water.

3. A herbicidal composition as claimed in claim 1, wherein the pyridazone derivative has the general formula

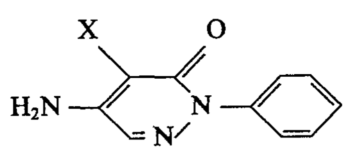

where X is chlorine or bromine.

4. A herbicidal composition as claimed in claim 1, wherein the biscarbamate has the general formula

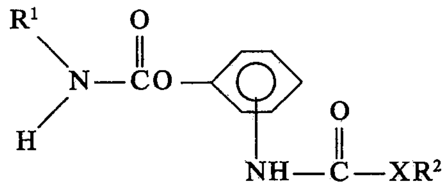

where

X is oxygen or sulphur,
$R^1$ is mono- or disubstituted phenyl bearing the substituents methyl, ethyl or halogen, and
$R^2$ is methyl or ethyl.

5. A herbicidal composition as claimed in claim 1, wherein the acid amide contains 80 to 150 g of pyridazone derivative per litre and 50 to 100 g of biscarbamate per litre.

6. A herbicidal composition as claimed in claim 1, which contains 30 to 100 g of emulsifier per litre and 50 to 120 g of wetting agent per litre.

7. A herbicidal composition as claimed in claim 1, which contains a mixture of 1-phenyl-4-amino-5-chloropyridazone-(6) and 3-methoxycarbonyl-aminophenyl-N-(3'-methyl-phenyl)-carbamate.

**Revendications**

1. Mélange herbicide liquide, à base d'un dérivé de pyridazone et d'un biscarbamate, caractérisé par le fait qu'il contient une solution du principe actif dans une amide de formule générale

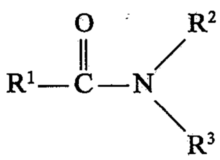

dans laquelle

$R^1$ repésente un reste alkyle ayant jusqu'à 8 atomes C ou un reste phényle, éventuellement substitué par méthyle ou éthyle, et
$R^2$, $R^3$ représentent chacun un reste alkyle ayant ensemble jusqu'à 8 atomes C et l'amide contient au total 8 à 15 atomes C.

2. Mélange herbicide selon la revendication 1, caractérisé par le fait que l'amide est soluble, jusqu'à 5% en poids, dans l'eau.

3. Mélange herbicide selon la revendication 1, caractérisé par le fait que le dérivé de pyridazone a la formule générale:

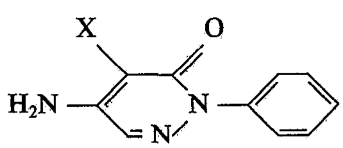

où X représente du chlore ou du brome.

4. Mélange herbicide selon la revendication 1, caractérisé par le fait que le biscarbamate à la formule générale

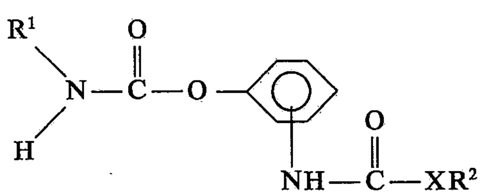

où X représente oxygène ou soufre et

$R^1$ représente un reste phényle mono- ou disubstitué, avec les substituants méthyle, éthyle ou halogène et
$R^2$ méthyle ou éthyle.

5. Mélange herbicide selon la revendication 1, caractérisé par le fait que la teneur en principe actif dans l'amide est de 80 à 150 g par litre, pour le dérivé de pyridazone, et de 50 à 100 g par litre pour le biscarbamate.

6. Mélange selon la revendication 1, caractérisé par le fait qu'il contient 30 à 100 g d'émulsifiant par litre et 50 à 120 g d'agent mouillant par litre.

7. Mélange herbicide selon la revendication 1, caractérisé par le fait qu'il contient un mélange de chloridazone et de phénmédiphame.